# FASCICULE DE BREVET EUROPEEN

(11) **EP 4 517 212 B1**
(45) Date de publication et mention de la délivrance du brevet: **08.04.2026**
(21) Numéro de dépôt: 24197533.3
(22) Date de dépôt: 30.08.2024
(51) Int. Cl.: F24S 20/50, H02S 30/20, F24S 30/00

(54) **CENTRALE SOLAIRE DÉPLOYABLE**
ENTFALTBARE SOLARANLAGE
CENTRALE SOLAIRE DÉPLOYABLE

(30) Priorité: 01.09.2023 FR 2309213
(43) Date de publication de la demande: 05.03.2025
(73) Titulaire: Groupe Roy Energie, 28310 Toury (FR)
(72) Inventeur: ROY, Romain, 45000 ORLEANS (FR)
(74) Mandataire: Boüan du Chef du Bos, Louis-Paterne

(56) Documents cités:
- EP-A1- 2 341 199
- WO-A1-2022/149977
- DE-U1- 202006 009 100
- JP-A- 2022 169 993
- KR-B1- 102 474 945
- US-A1- 2013 186 450
- US-A1- 2019 006 984
- US-A1- 2021 083 618

## Description

### Domaine de l'invention

La présente invention concerne une centrale solaire déployable.

Elle concerne en particulier une centrale solaire comprenant une pluralité de panneaux solaires articulés les uns avec les autres de façon à permettre le déploiement en accordéon de ces panneaux solaires.

### Art antérieur

Les centrales solaires permettent de collecter le rayonnement solaire afin de le convertir en énergie électrique et/ou thermique. Il met en œuvre des panneaux solaires, qui peuvent comprendre des cellules photovoltaïques, dans le cas des centrales solaires photovoltaïques convertissant le rayonnement solaire en énergie électrique, ou des conduites emplies de fluide calorifère, dans le cas des centrales solaires thermiques. Les centrales solaires comprennent en général une pluralité de tels panneaux solaires, placés sur un terrain de façon à collecter une grande quantité de rayonnement.

De nombreuses centrales solaires sont implantées de façon durable, les panneaux solaires qui les composent étant positionnés de façon fixe.

Il existe également des centrales solaires dites « déployables » comprenant une pluralité de panneaux solaires qui sont mobiles entre une position déployée, dans laquelle les panneaux solaires recouvrent une grande surface de terrain pour collecter une grande quantité de rayonnement solaire, et une position repliée dans laquelle les panneaux solaires sont rassemblés à proximité les uns des autres.

Dans de telles centrales déployables, il est généralement utile que les panneaux solaires occupent un volume le plus faible possible dans leur position repliée. En effet, dans leur position repliée, ces panneaux solaires peuvent être stockés dans un abri ou dans un contenant tel qu'un container de transport. Il est préférable que l'abri ou le container puisse recevoir un grand nombre de ces panneaux solaires. On recherche donc, au maximum, à placer les panneaux solaires les uns contre les autres dans leur position repliée, en minimisant les espaces perdus entre les panneaux solaires ou autour des panneaux solaires.

On cherche également, en général, à simplifier au maximum les manipulations permettant de passer la centrale solaire d'une configuration déployée, dans laquelle ses panneaux solaires sont dans leur position déployée, à sa configuration repliée, dans laquelle ses panneaux solaires sont dans leur position repliée, et réciproquement.

Il est ainsi apparu qu'il était efficace de réaliser des centrales solaires déployables composées d'un ensemble de panneaux solaires, dans lesquelles les panneaux solaires sont assemblés par paires de deux panneaux solaires assemblés l'un à l'autre par une charnière reliant les bords supérieurs des panneaux, chacune de ces paires de panneaux solaires étant assemblée à au moins une autre paire de panneaux solaires par une charnière reliant les bords inférieurs de l'un des panneaux solaires de chaque paire.

Dans de telles centrales solaires, le déploiement et le repliage des différents panneaux solaires se fait par un mouvement dit « en accordéon ».

Dans la position repliée des panneaux solaires, tous les panneaux solaires sont placés les uns contre les autres, les bords inférieurs de chacun des panneaux solaires étant sensiblement horizontaux, parallèles et proches les uns des autres, et les bords supérieurs de chacun des panneaux solaires étant parallèles et proches les uns des autres.

Lors du déploiement de cette centrale solaire, les bords inférieurs des différents panneaux solaires qui ne sont pas assemblés l'un à l'autre par des charnières sont éloignés les uns des autres, généralement en maintenant ces bords inférieurs dans un même plan horizontal de déploiement.

Du fait de ce déplacement, les angles que forment les différents panneaux solaires par rapport à l'horizontale diminuent, les bords supérieurs de ces panneaux solaires se rapprochant du plan horizontal de déploiement des bords inférieurs jusqu'à ce que les panneaux solaires soient placés dans leurs positions de déploiement, dans lesquelles ils ne forment qu'un angle faible, généralement inférieur à 30°, avec l'horizontale. Cette position de déploiement leur permet de collecter une grande quantité de rayonnement solaire.

On connaît plusieurs exemples de telles centrales solaires déployables en accordéon. On connaît ainsi différents moyens permettant de déplacer les bords inférieurs des différents panneaux dans un plan horizontal, lors du déploiement ou du repliage de la centrale solaire.

Parmi ces moyens de guidage, on connaît des rails disposés horizontalement dans la direction de déploiement des panneaux, ces rails guidant des patins de coulissement ou des roues associés aux bords inférieurs des panneaux solaires. Dans de tels cas, présentés par exemple par les documents EP3449566A1, FR3077361A1, ou CN109510571A, les roues ou patins associés aux bords inférieurs des panneaux solaires présentent des dimensions faibles pour ne pas gêner le pliage compact des panneaux solaires les uns contre les autres, dans leur position repliée. Le déploiement ou le repliage d'une telle centrale solaire exige des manipulations longues et délicates pour la mise en place ou le retrait des rails horizontaux. Par ailleurs, ces rails augmentent le poids et l'encombrement de la centrale solaire, quand celle-ci est en position repliée.

On connaît également d'autres solutions pour déplacer les bords inférieurs des différents panneaux solaires dans un plan horizontal, comme celle décrite dans le document EP2843320A1, dans lequel le guidage dans un plan horizontal des bords inférieurs de chaque panneau solaire est fait par un système pantographe, ou le document EP3391533A1, dans lequel le déploiement est fait par un véhicule portant les bords inférieurs des panneaux solaires au cours de leur déploiement, avant de les poser au sol dans leur position déployée. De telles solutions ne peuvent cependant être mises en œuvre que pour des centrales solaires de taille relativement réduite.

Document EP2341199A1 montre une centrale solaire selon le préambule de la revendication 1.

Il existe donc un besoin d'une solution permettant le déploiement en accordéon des panneaux solaires formant une centrale solaire déployable, qui soit plus facile à mettre en œuvre que les solutions de l'art antérieur, adaptée aux centrales solaires de grande taille, et permettant de stocker les panneaux très proches les uns des autres dans leur position repliée.

### Exposé de l'invention

La présente invention a pour objectif de pallier les inconvénients de l'art antérieur.

En particulier, l'invention a pour objectif de fournir des centrales solaires déployables dont les opérations de déploiement et de repliage peuvent être réalisées particulièrement facilement.

Un objectif particulier de l'invention est de fournir de telles centrales solaires permettant de couvrir, dans leur configuration déployée, une surface très importante.

Un autre objectif particulier de l'invention est de fournir de telles centrales solaires pouvant être repliées de façon très compacte, permettant par exemple leur stockage et/ ou leur transport dans un container de transport.

Ces objectifs, ainsi que d'autres qui apparaîtront plus clairement par la suite, sont atteints à l'aide d'une centrale solaire, comprenant une pluralité de panneaux solaires mobiles les uns par rapport aux autres entre une configuration déployée de la centrale solaire, dans laquelle les panneaux solaires sont relativement éloignés les uns des autres, et une configuration repliée de la centrale solaire dans laquelle les panneaux solaires sont relativement rapprochés les uns des autres, chacun des panneaux solaires présentant un bord inférieur et un bord supérieur opposé et sensiblement parallèle au bord inférieur, le bord supérieur étant plus haut que le bord inférieur, au moins dans la configuration repliée de la centrale solaire, au moins une partie des panneaux solaires étant assemblés par paires de deux panneaux solaires assemblés l'un à l'autre par au moins une charnière reliant les bords supérieurs de chacun de ces deux panneaux solaires, les bords inférieurs de chacun de ces deux panneaux solaires formant l'une des paires de panneaux solaires étant associés à des roues dont les axes sont sensiblement parallèles à ces bords inférieurs. Selon l'invention, chacune des roues associée à l'un des bords inférieurs des deux panneaux solaires formant l'une des paires de panneaux solaires est placée dans un plan distant des plans dans lesquels sont placées les autres roues associées aux bords inférieurs des deux panneaux solaires formant la paire de panneaux solaires.

Une telle répartition des roues de la centrale solaire permet que les roues associées aux bords inférieurs de panneaux solaires voisins ne gênent pas le pliage compact de ces panneaux, même si ces roues présentent une grande taille. Il est ainsi possible d'associer aux bords inférieurs des panneaux solaires des roues dont le diamètre est plusieurs fois supérieur à l'épaisseur des panneaux solaires, sans que cela ne gêne le repliage des panneaux solaires, très proches les uns des autres. L'utilisation de telles roues de grand diamètre peut permettre le déploiement et le repliage des panneaux sans utiliser de rails, même sur un terrain dont la planéité n'est pas parfaite, ce qui simplifie considérablement le déploiement et le repliage de la centrale solaire.

Avantageusement, chacune des roues associée à l'un des bords inférieurs des deux panneaux solaires formant l'une des paires de panneaux solaires est placée dans un plan distant des plans dans lesquels sont placées les autres roues associées aux bords inférieurs des deux panneaux solaires formant la paire de panneaux solaires, d'une distance supérieure à la largeur d'une de ces roues.

Cette distance entre les plans permet de garantir l'absence de collision entre les roues, lors du repliage de la centrale solaire.

Selon un mode de réalisation préférentiel, les panneaux solaires de la centrale solaire sont assemblés de façon à former au moins deux paires de panneaux solaires, chacune de ces paires de panneaux solaires étant assemblée à au moins une autre des paires de panneaux solaires, par une charnière reliant les bords inférieurs de l'un des panneaux solaires de chacune des paires de panneaux solaires assemblés l'un à l'autre.

Un tel assemblage des paires de panneaux solaires permet le déploiement de la centrale en accordéon.

Avantageusement, la charnière reliant les bords inférieurs de l'un des panneaux solaires de chacune des paires de panneaux solaires assemblés l'un à l'autre est coaxiale à au moins une des roues, qui est associée à chacun des bords inférieurs de ces panneaux solaires reliés par la charnière.

Dans ce mode de réalisation avantageux, les axes de roues forment également les axes des charnières reliant les bords inférieurs des panneaux solaires. Cette conformation permet de simplifier l'assemblage des panneaux solaires. Elle permet également que ces roues soient assemblées, en même temps, aux bords inférieurs de deux panneaux solaires, pour porter ces bords inférieurs et permettre leur déplacement, pour le déploiement ou le repliage de la centrale solaire.

Selon un mode de réalisation avantageux, les roues associées aux bords inférieurs des panneaux solaires formant l'une des paires de panneaux solaires sont placées respectivement dans des plans parallèles les uns aux autres formant un ensemble de plans, et les roues associées aux bords inférieurs des panneaux solaires formant les autres paires de panneaux solaires sont placées dans des plans appartenant au même ensemble de plans.

Selon ce mode de réalisation, il est possible de mettre en œuvre, dans la centrale solaire, des paires de panneaux solaires qui sont sensiblement identiques, en les assemblant les unes aux autres de façon à éviter les contacts entre les roues dans la configuration repliée de la centrale. Un tel mode de réalisation permet de standardiser les composants utilisés pour réaliser la centrale. Il ne permet cependant que l'utilisation de roues dont le diamètre est assez faible, généralement inférieur à quatre fois l'épaisseur des panneaux solaires.

Selon un autre mode de réalisation avantageux, chacune des roues associée à l'un des bords inférieurs des panneaux solaires formant deux paires de panneaux solaires assemblées l'une avec l'autre est placée dans un plan distant des plans dans lesquels sont placées les autres roues associées aux bords inférieurs des panneaux solaires formant ces deux paires de panneaux solaires assemblés l'un avec l'autre.

Un tel mode de réalisation permet la mise en œuvre de roues de grand diamètre. En effet, les roues associées au bord inférieur d'un panneau solaire peuvent s'étendre, dans la configuration repliée de la centrale solaire, sous un grand nombre de panneaux solaires voisins les uns des autres.

De préférence, les roues sont associées aux bords inférieurs des panneaux solaires par l'intermédiaire de chapes maintenant les axes des roues, chacune des chapes étant solidaire d'une pièce de renfort fixée elle-même au bord inférieur de l'un des panneaux solaires, la pièce de renfort s'étendant le long d'une portion du bord inférieur sur une longueur supérieure à dix fois la largeur de la roue.

La présence d'une telle pièce de renfort permet de répartir les efforts mécaniques provenant des roues sur une plus grande portion du bord inférieur du panneau solaire. Il est ainsi possible de transférer ces efforts vers une zone renforcée du panneau solaire, indépendamment de la position de la roue sur le bord inférieur du panneau solaire.

Avantageusement, chacune des paires de deux panneaux solaires comprend des moyens de blocage réversibles de la charnière reliant les bords supérieurs des deux panneaux solaires de la paire de panneaux solaires, dans une position angulaire correspondant à une configuration déployée de la centrale solaire.

Ces moyens de blocage réversibles peuvent être retirés progressivement des charnières, lors du repliage de la centrale solaire, pour ne permettre le repliage d'une paire de panneaux solaires qu'après le repliage de la paire de panneaux solaires voisine. On peut ainsi obtenir un repliage ordonné des panneaux solaires.

### Description des figures

L'invention sera mieux comprise à la lecture de la description suivante de modes de réalisation préférentiels, donnée à titre de simple exemple figuratif et non limitatif, et accompagnée des figures parmi lesquelles :
- La [Fig.1] est une représentation schématique d'une centrale solaire selon un mode de réalisation de l'invention, dans sa configuration déployée.
- La [Fig.2] est une vue de côté de la centrale solaire de la [Fig.1], dans sa configuration déployée.
- La [Fig.3] est une vue de dessus de la centrale solaire de la [Fig.1], dans sa configuration déployée.
- La [Fig.4] est une vue de côté de la centrale solaire de la [Fig.1], dans sa configuration repliée.
- La [Fig.5] est une vue de dessous de la centrale solaire de la [Fig.1], dans sa configuration repliée.

### Description des modes de réalisation

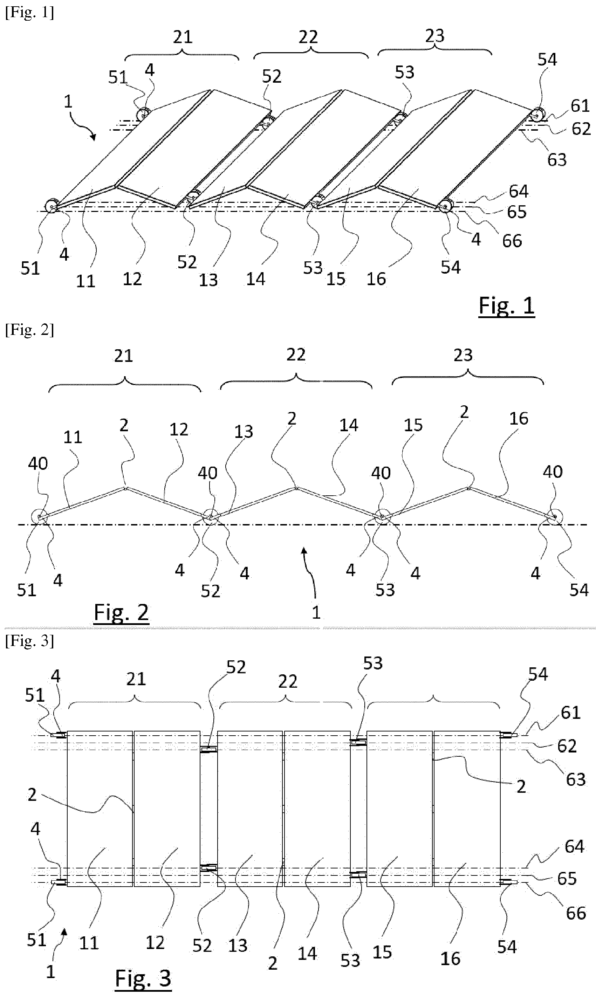

La [Fig.1] représente, de façon schématique, une centrale solaire 1 selon un mode de réalisation de l'invention. Cette centrale solaire 1 est constituée par une pluralité de panneaux solaires, en l'occurrence six panneaux solaires 11, 12, 13, 14, 15 et 16. Un panneau solaire, ou panneau, au sens de la présente description, est une plaque sensiblement rigide dont l'une des faces, appelée par la suite face supérieure, présente des moyens aptes à recevoir le rayonnement solaire pour le transformer en une autre forme d'énergie. Cette surface supérieure est la surface du panneau qui est orientée vers le haut quand le panneau est dans sa position déployée.

Dans un mode de réalisation préférentiel, ces panneaux solaires sont des panneaux photovoltaïques. Dans ce cas, les faces supérieures de chacun des panneaux peuvent être recouvertes de cellules photovoltaïques. Ainsi, chacun des panneaux peut par exemple être constitué par un cadre métallique, offrant au panneau les caractéristiques mécaniques nécessaires, ce cadre métallique portant une ou plusieurs plaques de cellules photovoltaïques.

Dans le mode de réalisation représenté, chacun des panneaux 11, 12, 13, 14, 15 et 16 présente deux bords opposés sensiblement parallèles, appelés respectivement le bord inférieur et le bord supérieur du panneau. En utilisation, le bord inférieur et le bord supérieur de chaque panneau sont destinés à être sensiblement horizontaux, le bord supérieur étant destiné à être plus haut que le bord inférieur, au moins dans la position repliée du panneau.

Dans la centrale solaire 1, les panneaux 11, 12, 13, 14, 15 et 16 sont articulés les uns par rapport aux autres, les uns à la suite des autres. Un premier panneau 11 et un dernier panneau 16, formant les extrémités de la centrale solaire 1, sont chacun articulés à un autre panneau au niveau de leur bord supérieur. Les autres panneaux 12, 13, 14 et 15 sont chacun articulés à deux autres panneaux, respectivement au niveau de leur bord supérieur et au niveau de leur bord inférieur.

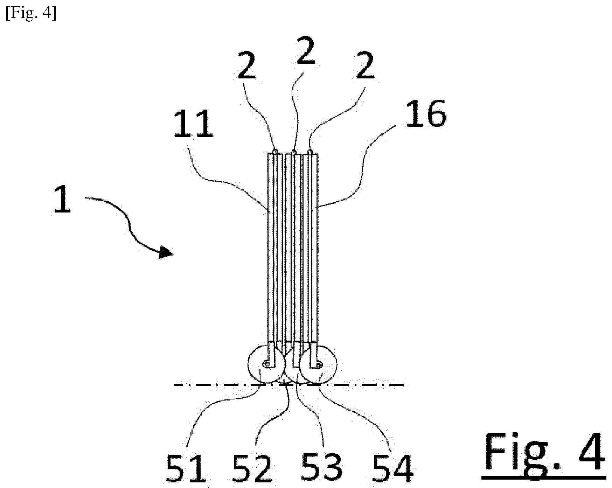

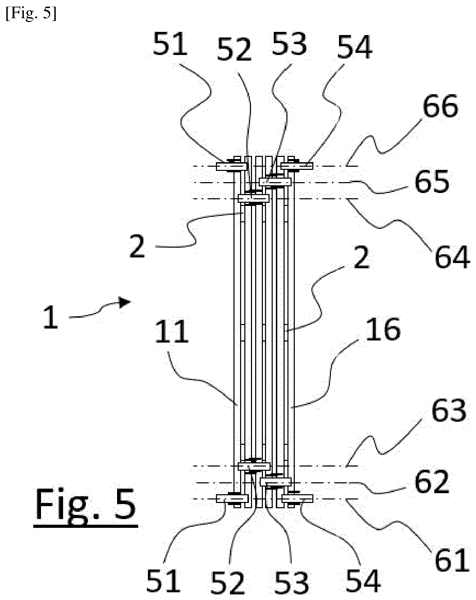

Les articulations entre les panneaux 11, 12, 13, 14, 15 et 16 constituant la centrale solaire 1 permettent à cette centrale solaire 1 d'être déformée entre une configuration déployée, qui est représentée par les figures 1, 2 et 3, dans laquelle les panneaux 11, 12, 13, 14, 15 et 16 sont orientés dans une position déployée pour collecter le rayonnement solaire, et une configuration repliée, qui est représentée par les figures 4 et 5, dans laquelle les panneaux 11, 12, 13, 14, 15 et 16 sont orientés dans une position repliée de telle sorte que la centrale solaire 1 occupe un volume réduit.

Cette centrale solaire 1 peut ainsi, dans sa configuration déployée, couvrir une grande surface de terrain pour collecter une grande quantité de rayonnement solaire et, dans sa configuration repliée, occuper un volume minimal lui permettant d'être facilement stockée ou transportée. Selon un mode de réalisation avantageux, cette centrale solaire 1 peut ainsi être dimensionnée de façon à pouvoir être contenue dans un container de transport, quand elle est dans sa configuration repliée, afin d'assurer facilement son stockage ou son transport.

Les différents panneaux 11, 12, 13, 14, 15 et 16 constituant la centrale solaire 1 sont répartis par paires, chaque paire de panneaux étant constituée par deux panneaux articulés l'un avec l'autre le long de leurs bords supérieurs, sensiblement horizontaux. Ainsi, les panneaux 11 et 12 sont articulés pour former la paire de panneaux 21, les panneaux 13 et 14 sont articulés pour former la paire de panneaux 22, et les panneaux 15 et 16 sont articulés pour former la paire de panneaux 23.

Les articulations entre les bords supérieurs de chaque panneau sont réalisées par des charnières 2 dont l'axe horizontal longe les bords supérieurs des deux panneaux de chaque paire de panneaux. Ces articulations permettent à ces deux panneaux de se déplacer l'un par rapport à l'autre, à la façon des branches d'un compas, entre leur position repliée dans laquelle les deux panneaux sont sensiblement parallèles l'un à l'autre et leur position déployée dans laquelle les panneaux forment, l'un par rapport à l'autre, un angle compris de préférence entre 90° et 180°. Dans un mode de réalisation préféré, les panneaux forment ainsi, l'un par rapport à l'autre, un angle de 155° +/- 10°. Des moyens appropriés, connus de l'homme du métier et non représentés sur les figures, peuvent être mis en œuvre pour maintenir les panneaux dans cette position angulaire.

De préférence, le bord inférieur de chaque panneau 11, 12, 13, 14, 15 et 16 est associé à des roues. Ainsi, dans le mode de réalisation représenté par les figures, le bord inférieur de chaque panneau est équipé de deux chapes 4, qui portent respectivement les arbres de rotation 40 coaxiaux de deux roues de taille identique. L'axe de rotation des roues associées au bord inférieur de chaque panneau est sensiblement horizontal et parallèle à ce bord inférieur. Par exemple, dans la paire de panneaux 21, le bord inférieur du panneau 11 est associé, par l'intermédiaire de chapes 4, aux roues 51, et le bord inférieur du panneau 12 est associé, par l'intermédiaire de chapes 4, aux roues 52.

Les chapes 4 peuvent avantageusement être solidarisées aux bords inférieurs des panneaux par l'intermédiaire d'une pièce de renfort s'étendant le long d'une portion du bord inférieur du panneau. Une telle pièce de renfort permet de répartir les efforts mécaniques provenant des roues sur une plus grande portion du bord inférieur du panneau solaire. Il est ainsi possible de transférer ces efforts vers une zone renforcée du panneau solaire, indépendamment de la position de la roue sur le bord inférieur du panneau solaire. De préférence, la pièce de renfort s'étend sur une longueur du bord inférieur du panneau qui est très supérieure à la largeur de la roue. Cette longueur peut être ainsi supérieure à dix fois la largeur de la roue, voire supérieure à vingt fois la largeur de la roue.

Les roues, en roulant sur le sol dans une direction appelée direction de déploiement, horizontale et perpendiculaire au bord inférieur des plaques, permettent un déplacement facile sur le sol des bords inférieurs des panneaux constituant une paire de panneaux, afin de les rapprocher pour placer les panneaux dans leur position repliée, ou au contraire de les éloigner pour placer les panneaux dans leur position déployée. Elles permettent également à la paire de panneaux de se déplacer facilement en roulant sur le sol dans la direction de déploiement, notamment quand les panneaux sont dans leur position déployée.

Avantageusement, la centrale solaire 1 est constituée par plusieurs paires de panneaux 21, 22 et 23, alignées les unes après les autres le long de la direction de déploiement, chacune des paires de panneaux étant assemblée à au moins une autre paire de panneaux par une charnière reliant les bords inférieurs de l'un des panneaux solaires de chacune de ces paires de panneaux assemblés l'un à l'autre. En d'autres termes, le bord inférieur d'au moins un des panneaux de chaque paire est articulé au bord inférieur de l'un des panneaux d'une paire voisine, par une charnière formant une articulation dont l'axe est sensiblement horizontal, et sensiblement parallèle au bord inférieur des plaques articulées entre elles.

Ces charnières permettent à l'ensemble des plaques formant la centrale solaire 1 de se déployer ou de se replier à la façon d'un accordéon. Ainsi, quand la centrale solaire 1 est dans sa position repliée représentée par la [Fig.4], il est possible de la déployer facilement en maintenant le bord inférieur du premier panneau 11, formant une première extrémité de la centrale solaire 1, et en tirant dans la direction de déploiement le bord inférieur du dernier panneau 16, formant la deuxième extrémité de la centrale solaire 1, afin de l'éloigner du bord inférieur du premier panneau 11. Ce déploiement peut notamment être obtenu en tirant le bord inférieur du dernier panneau 16 à l'aide d'un véhicule.

Les roues, permettant le déplacement facile de chacun des bords inférieurs des panneaux, permettent un déploiement facilité de la centrale solaire 1. De préférence, chaque paire de panneaux peut être bloquée en position repliée par des moyens de blocage réversibles, tel qu'une goupille (non représentée) placée dans un trou traversant différentes parties mobiles de la charnière reliant les bords supérieurs des deux panneaux solaires de la paire de panneaux solaires, pour les immobiliser dans une position angulaire correspondant à la configuration repliée de la centrale solaire. Le retrait successif de ces moyens de blocage permet alors de déployer la centrale solaire 1 de façon ordonnée, chaque paire de panneaux n'étant déployée qu'après le déploiement complet de la paire qui lui est voisine.

Le repliage de la centrale solaire 1 peut être fait par un mouvement inverse, en poussant sur le bord inférieur du dernier panneau 16 pour le rapprocher du bord inférieur du premier panneau 11. Là encore, chaque paire de panneaux peut-être avantageusement bloquée en position déployée par des moyens de blocage réversibles, tel qu'une goupille (non représentée) placée dans un trou traversant différentes parties mobiles de la charnière reliant les bords supérieurs des deux panneaux solaires de la paire de panneaux solaires, pour les immobiliser dans une position angulaire correspondant à la configuration déployée de la centrale solaire. Le retrait successif de ces moyens de blocage, lors du repliage, permet que ce repliage se fasse de façon ordonnée, chaque paire de panneaux n'étant repliée qu'après le repliage complet de la paire qui lui est voisine.

Ainsi, il y a un avantage à mettre en œuvre une centrale solaire, comprenant une pluralité de panneaux solaires mobiles les uns par rapport aux autres entre une configuration déployée de la centrale solaire, dans laquelle les panneaux solaires sont relativement éloignés les uns des autres, et une configuration repliée de la centrale solaire dans laquelle les panneaux solaires sont relativement rapprochés les uns des autres, chacun des panneaux solaires présentant un bord inférieur, et un bord supérieur opposé et sensiblement parallèle à son bord inférieur, le bord supérieur étant plus haut que le bord inférieur, au moins dans la configuration repliée de la centrale solaire, au moins une partie des panneaux solaires étant assemblés par paires de deux panneaux solaires assemblés l'un à l'autre par une charnière reliant les bords supérieurs de chacun desdits deux panneaux solaires, dans laquelle chacune des paires de deux panneaux solaires comprend des moyens de blocage réversibles de la charnière reliant les bords supérieurs des deux panneaux solaires de la paire de panneaux solaires, dans une position angulaire correspondant à une configuration déployée de la centrale solaire.

Une telle centrale solaire peut en effet être repliée de façon ordonnée, en poussant une extrémité de la centrale vers son autre extrémité, pendant qu'on déverrouille successivement les moyens de verrouillage.

Il est préférable que les bords inférieurs de chacun des deux panneaux solaires formant chacune de ces paires de panneaux solaires soient associés à des roues.

Il y a également un avantage à mettre en œuvre un procédé de repliage d'une telle centrale solaire, selon lequel on replie la centrale solaire en poussant l'extrémité inférieure d'un panneau solaire formant une extrémité de la centrale solaire vers le panneau solaire formant l'autre extrémité de la centrale, pendant qu'on déverrouille successivement les moyens de verrouillage de chacune des paires de panneaux solaires, pour permettre le repliage d'une paire de panneaux solaires après le pliage de la paire voisine.

Selon un mode de réalisation particulièrement avantageux représenté par les figures, la charnière formant l'articulation entre le bord inférieur d'un des panneaux d'une des paires de panneaux et le bord inférieur d'un panneau d'une paire de panneaux voisine est formée par les arbres de rotation des roues associées aux bords inférieurs des deux panneaux.

Ainsi, par exemple, les bords inférieurs voisins des panneaux 12 et 13 sont chacun solidaire de chapes 4 destinées à porter les arbres de rotation 40 de roues. Deux chapes 4 respectivement solidaires des panneaux 12 et 13 portent cependant un même arbre de rotation 40, qui porte une unique roue 52. Cet arbre de rotation 40 permet donc à la fois la rotation de la roue 51 par rapport à chacune des chapes 4, et donc par rapport à chacun des panneaux 12 et 13 portant les chapes 4, et la rotation des deux chapes 4, l'une par rapport à l'autre, et donc la rotation des panneaux 12 et 13 l'un par rapport à l'autre. Cet arbre de rotation 40 forme ainsi l'axe d'une charnière entre les panneaux 12 et 13, dont les chapes 4 respectivement solidaires des panneaux 12 et 13 forment les charnons.

La roue 51 est ainsi associée au bord inférieur de chacun des deux panneaux 12 et 13 voisins, et tourne autour d'un axe horizontal et parallèle au bord inférieur des deux panneaux 12 et 13, qui est également l'axe de l'articulation entre ces deux panneaux 12 et 13. De préférence, comme le montrent les figures 1 et 3, le bord inférieur d'au moins un des panneaux de chaque paire est associé au bord inférieur d'un panneau voisin par l'intermédiaire de deux arbres de rotation 40 coaxiaux, chacun de ces arbres de rotation 40 étant maintenu par une chape 4 solidaire de l'un des panneaux, et portant une roue 52, 53 ou 54.

De préférence, les chapes 4 portant les roues présentent une forme adaptée pour permettre aux panneaux, dans leur position repliée, de prendre une position sensiblement parallèle l'un à l'autre et proches l'un de l'autre.

Selon une caractéristique particulièrement avantageuse de l'invention, les roues associées au bord inférieur d'un premier panneau de chaque paire de panneaux et les roues associées au bord inférieur du deuxième panneau de cette paire de panneaux ne sont pas alignées les unes avec les autres. Au contraire, chacune de ces roues est placée dans un plan distant des plans dans lesquels sont placées les autres roues associées aux bords inférieurs des deux panneaux solaires formant ladite paire de panneaux solaires.

On considère, dans la présente demande, qu'une roue est placée dans un plan qui est le plan médian de la roue, perpendiculaire à son axe de rotation. L'intersection entre ce plan médian et le sol constitue la trajectoire de la roue, au sens de la présente demande. Ainsi, les plans dans lesquels sont placées les roues associées aux bords inférieurs des panneaux d'une même paire de panneaux sont parallèles entre eux mais distants les uns des autres, de telle sorte que chacune des roues associées aux bords inférieurs des panneaux d'une paire de panneaux roule sur une trajectoire distincte, parallèle à la direction de déploiement.

Ainsi, par exemple, dans le mode de réalisation représenté par les figures, les panneaux 11 et 12 de la première paire de panneaux 21 sont respectivement associés aux roues 51 et aux roues 52. Les deux roues 51 roulent respectivement sur les trajectoires distinctes 61 et 66, et les deux roues 52 roulent respectivement sur les trajectoires distinctes 63 et 64, distinctes des trajectoires 61 et 66. De même, les panneaux 13 et 14 de la deuxième paire de panneaux 22 sont respectivement associés aux roues 52 et aux roues 53. Les deux roues 52 roulent respectivement sur les trajectoires distinctes 63 et 64, et les deux roues 53 roulent respectivement sur les trajectoires distinctes 62 et 65, distinctes des trajectoires 61 et 64. Enfin, les panneaux 15 et 16 de la troisième paire de panneaux 23 sont respectivement associés aux roues 53 et aux roues 54. Les deux roues 53 roulent respectivement sur les trajectoires distinctes 62 et 65, et les deux roues 54 roulent respectivement sur les trajectoires distinctes 61 et 66, distinctes des trajectoires 62 et 65.

Il est à noter que, dans le mode de réalisation représenté, les deux roues associées au bord inférieur de chaque panneau sont avantageusement réparties de telle sorte que le poids du panneau se répartisse également sur ces deux roues.

De préférence, les distances entre les plans médians de deux roues associées aux bords inférieurs des panneaux d'une même paire de panneaux, et donc entre les trajectoires de ces roues, sont supérieures à la largeur d'une roue. Ainsi, quand les panneaux sont dans leur position repliée, les roues associées au bord inférieur des deux panneaux d'une paire ne risquent pas de rentrer en contact l'une avec l'autre, même si elles présentent un diamètre supérieur à l'épaisseur du panneau. Il est ainsi possible de plier de façon compacte les panneaux constituant la centrale 1, dans leur position repliée, tout en associant les bords inférieurs des panneaux avec des roues de grand diamètre. Malgré leurs grandes dimensions, les roues ne risquent pas de gêner le repliage, comme le montre la [Fig.5], qui représente la centrale solaire 1 en configuration repliée, vue de dessous.

L'utilisation de telles roues qui ne sont pas alignées les unes sur les autres, et qui en conséquence peuvent avoir un grand diamètre, se distingue clairement des solutions de l'art antérieur dans lesquelles les bords inférieurs des panneaux pouvaient être associés à des coulisseaux ou des roues de petit diamètre, alignés les uns sur les autres pour coulisser dans des rails.

En effet, les roues non alignées les unes par rapport aux autres ne sont pas adaptées pour rouler dans des rails communs. En revanche, leur grand diamètre leur permet de rouler plus facilement sur un terrain non spécifiquement adapté au roulement, et présentant des imperfections. De telles roues de grand diamètre peuvent ainsi rouler sur un terrain bétonné, sableux, gravillonné ou enherbé, qui présente des caractéristiques de planéité suffisante pour éviter de déformer les panneaux constituant la centrale solaire 1 au-delà de tolérances prédéterminées.

Ces grandes roues permettent donc de déployer très facilement la centrale solaire 1 sur une grande diversité de terrains, sans qu'il soit nécessaire d'y placer des rails ou d'y effectuer une préparation complexe.

Selon un mode de réalisation possible de l'invention, les roues associées aux bords inférieurs des panneaux solaires formant l'une des paires de panneaux solaires sont placées respectivement dans des plans formant un ensemble de plans, et les roues associées aux bords inférieurs des panneaux solaires formant les autres paires de panneaux solaires sont placées dans des plans appartenant au même ensemble de plans. Une telle configuration permet de standardiser les composants utilisés pour réaliser la centrale. Il ne permet cependant que l'utilisation de roues dont le diamètre est assez faible.

Au contraire, dans le mode de réalisation représenté par les figures, chacune des roues associée à l'un des bords inférieurs des panneaux solaires formant deux paires de panneaux solaires assemblés l'un avec l'autre est placée dans un plan distant des plans dans lesquels sont placées les autres roues associées aux bords inférieurs des panneaux solaires formant ces deux paires de panneaux solaires assemblés l'un avec l'autre.

Ainsi, les roues associées à la centrale solaire 1 sont réparties sur trois séries de trajectoires : une première série comprenant les trajectoires 61 et 64, qui reçoit les roues 52, une deuxième série comprenant les trajectoires 62 et 65, qui reçoit les roues 53, et une troisième série comprenant les trajectoires 63 et 66, qui reçoit les roues 51 et 54. Les roues associées à deux paires de panneaux articulées l'une avec l'autre ne sont pas alignées les unes avec les autres. Une telle configuration permet avantageusement l'utilisation de roues de plus grand diamètre et un repliage compact des panneaux, sans risque de contact entre les roues. Il est ainsi possible d'utiliser des roues de grand diamètre. En effet, les roues associées au bord inférieur d'un panneau peuvent s'étendre, dans la configuration repliée de la centrale solaire, sous un grand nombre de panneaux solaires voisins les uns des autres.

Il est bien entendu possible de répartir les roues de la centrale solaire 1 le long d'un plus grand nombre de trajectoires, par exemple pour que les roues associées à trois, voire quatre paires de panneaux articulées les unes avec les autres ne soient pas alignées les unes avec les autres. De tels modes de réalisation permettent avantageusement l'utilisation de roues de plus grand diamètre, sans que ces roues fassent obstacle au repliage compact des plaques.

## Revendications

1. Centrale solaire (1), comprenant une pluralité de panneaux solaires (11, 12, 13, 14, 15, 16) mobiles les uns par rapport aux autres entre une configuration déployée de ladite centrale solaire (1), dans laquelle lesdits panneaux solaires (11, 12, 13, 14, 15, 16) sont relativement éloignés les uns des autres, et une configuration repliée de ladite centrale solaire (1) dans laquelle lesdits panneaux solaires (11, 12, 13, 14, 15, 16) sont relativement rapprochés les uns des autres,
chacun desdits panneaux solaires (11, 12, 13, 14, 15, 16) présentant un bord inférieur, et un bord supérieur opposé et sensiblement parallèle audit bord inférieur, ledit bord supérieur étant plus haut que ledit bord inférieur, au moins dans ladite configuration repliée de ladite centrale solaire (1),
au moins une partie desdits panneaux solaires (11, 12, 13, 14, 15, 16) étant assemblés par paires (21, 22, 23) de deux panneaux solaires assemblés l'un à l'autre par au moins une charnière (2) reliant les bords supérieurs de chacun desdits deux panneaux solaires (11, 12, 13, 14, 15, 16),
les bords inférieurs de chacun desdits deux panneaux solaires (11, 12, 13, 14, 15, 16) formant l'une desdites paires (21, 22, 23) de panneaux solaires étant associés à des roues (51, 52, 53, 54) dont les axes sont sensiblement parallèles auxdits bords inférieurs,
**caractérisée en ce que** chacune des roues (51, 52, 53, 54) associée à l'un des bords inférieurs desdits deux panneaux solaires (11, 12, 13, 14, 15, 16) formant l'une desdites paires (21, 22, 23) de panneaux solaires est placée dans un plan distant des plans dans lesquels sont placées les autres roues (51, 52, 53, 54) associées auxdits bords inférieurs desdits deux panneaux solaires (11, 12, 13, 14, 15, 16) formant ladite paire (21, 22, 23) de panneaux solaires.

2. Centrale solaire selon la revendication 1, **caractérisée en ce que** chacune des roues (51, 52, 53, 54) associée à l'un des bords inférieurs desdits deux panneaux solaires (11, 12, 13, 14, 15, 16) formant l'une desdites paires (21, 22, 23) de panneaux solaires est placée dans un plan distant des plans dans lesquels sont placées les autres roues (51, 52, 53, 54) associées aux bords inférieurs desdits deux panneaux solaires (11, 12, 13, 14, 15, 16) formant ladite paire (21, 22, 23) de panneaux solaires, d'une distance supérieure à la largeur d'une desdites roues (51, 52, 53, 54).

3. Centrale solaire selon l'une quelconque des revendications précédentes, **caractérisée en ce que** lesdits panneaux solaires (11, 12, 13, 14, 15, 16) de ladite centrale solaire (1) sont assemblés de façon à former au moins deux desdites paires (21, 22, 23) de panneaux solaires, chacune desdites paires (21, 22, 23) de panneaux solaires étant assemblée à au moins une autre desdites paires (21, 22, 23) de panneaux solaires, par une charnière reliant les bords inférieurs de l'un des panneaux solaires (11, 12, 13, 14, 15, 16) de chacune desdites paires (21, 22, 23) de panneaux solaires assemblés l'un à l'autre.

4. Centrale solaire selon la revendication précédente, **caractérisée en ce que** ladite charnière reliant les bords inférieurs de l'un des panneaux solaires (11, 12, 13, 14, 15, 16) de chacune desdites paires (21, 22, 23) de panneaux solaires est coaxiale à au moins une desdites roues (51, 52, 53, 54), qui est associée à chacun desdits bords inférieurs desdits panneaux solaires (11, 12, 13, 14, 15, 16) reliés par ladite charnière.

5. Centrale solaire selon l'une quelconque des revendications 3 à 4, **caractérisée en ce que** lesdites roues (51, 52, 53, 54) associées aux bords inférieurs des panneaux solaires (11, 12, 13, 14, 15, 16) formant l'une desdites paires (21, 22, 23) de panneaux solaires sont placées respectivement dans des plans parallèles les uns aux autres formant un ensemble de plans, et **en ce que** les roues (51, 52, 53, 54) associées aux bords inférieurs des panneaux solaires (11, 12, 13, 14, 15, 16) formant les autres paires (21, 22, 23) de panneaux solaires sont placées dans des plans appartenant au même ensemble de plans.

6. Centrale solaire selon l'une quelconque des revendications 3 à 4, **caractérisée en ce que** chacune des roues (51, 52, 53, 54) associée à l'un des bords inférieurs des panneaux solaires (11, 12, 13, 14, 15, 16) formant deux desdites paires (21, 22, 23) de panneaux solaires assemblés l'un avec l'autre est placée dans un plan distant des plans dans lesquels sont placées les autres roues (51, 52, 53, 54) associées aux bords inférieurs desdits panneaux solaires (11, 12, 13, 14, 15, 16) formant lesdites deux paires (21, 22, 23) de panneaux solaires assemblés l'un avec l'autre.

7. Centrale solaire selon l'une quelconque des revendications précédentes, **caractérisée en ce que** lesdites roues (51, 52, 53, 54) sont associées auxdits bords inférieurs desdits panneaux solaires (11, 12, 13, 14, 15, 16) par l'intermédiaire de chapes (4) maintenant les axes desdites roues (51, 52, 53, 54), chacune desdites chapes (4) étant solidaire d'une pièce de renfort fixée elle-même audit bord inférieur de l'un desdits panneaux solaires (11, 12, 13, 14, 15, 16), ladite pièce de renfort s'étendant le long d'une portion dudit bord inférieur sur une longueur supérieure à dix fois la largeur de ladite roue.

8. Centrale solaire selon l'une quelconque des revendications précédentes, **caractérisée en ce que** chacune desdites paires (21, 22, 23) de deux panneaux solaires comprend des moyens de blocage réversibles de ladite charnière (2) reliant les bords supérieurs des deux panneaux solaires (11, 12, 13, 14, 15, 16) de la paire (21, 22, 23) de panneaux solaires, dans une position angulaire correspondant à une configuration déployée de ladite centrale solaire (1).

## Patentansprüche

1. Solaranlage (1), umfassend eine Vielzahl von Solarpaneelen (11, 12, 13, 14, 15, 16), die zwischen einer entfalteten Konfiguration der Solaranlage (1), in der die Solarpaneelen (11, 12, 13, 14, 15, 16) relativ weit voneinander entfernt sind, und einer zusammengefalteten Konfiguration der Solaranlage (1), in der die Solarpaneelen (11, 12, 13, 14, 15, 16) relativ nahe beieinander sind, relativ zueinander beweglich sind, wobei jedes der Solarpaneele (11, 12, 13, 14, 15, 16) einen unteren Rand und einen oberen Rand aufweist, der dem unteren Rand gegenüberliegt und im Wesentlichen parallel zu diesem ist, wobei der obere Rand höher als der untere Rand ist, mindestens in der zusammengefalteten Konfiguration der Solaranlage (1),
wobei mindestens ein Teil der Solarpaneele (11, 12, 13, 14, 15, 16) paarweise (21, 22, 23) aus zwei Solarpaneelen montiert ist, die durch mindestens ein Scharnier (2) miteinander montiert sind, welches die oberen Ränder jedes der zwei Solarpaneelen (11, 12, 13, 14, 15, 16) miteinander verbindet,
wobei die unteren Ränder jedes der zwei Solarpaneelen (11, 12, 13, 14, 15, 16), die eines der Paare (21, 22, 23) von Solarpaneelen bilden, Rädern (51, 52, 53, 54) zugeordnet sind, deren Achsen im Wesentlichen parallel zu den unteren Rändern verlaufen,
**dadurch gekennzeichnet, dass** jedes der Räder (51, 52, 53, 54), das einem der unteren Ränder der zwei Solarpaneelen (11, 12, 13, 14, 15, 16) zugeordnet ist, die eines der Paare (21, 22, 23) von Solarpaneelen bilden, in einer Ebene angeordnet ist, die von den Ebenen beabstandet ist, in denen die anderen Räder (51, 52, 53, 54) angeordnet sind, die den unteren Rändern der zwei Solarpaneele (11, 12, 13, 14, 15, 16) zugeordnet sind, welche das Paar (21, 22, 23) von Solarpaneelen bilden.

2. Solaranlage nach Anspruch 1, **dadurch gekennzeichnet, dass** jedes der Räder (51, 52, 53, 54), das einem der unteren Ränder der zwei Solarpaneele (11, 12, 13, 14, 15, 16) zugeordnet ist, die eines der Paare (21, 22, 23) von Solarpaneelen bilden, in einer Ebene angeordnet ist, die von den Ebenen, in denen die anderen Räder (51, 52, 53, 54) angeordnet sind, die den unteren Rändern der zwei Solarpaneelen (11, 12, 13, 14, 15, 16) zugeordnet sind, die das Paar (21, 22, 23) von Solarpaneelen bilden, um eine Entfernung beabstandet ist, die größer ist als die Breite eines der Räder (51, 52, 53, 54).

3. Solaranlage nach einem der vorstehenden Ansprüche,
**dadurch gekennzeichnet, dass** die Solarpaneele (11, 12, 13, 14, 15, 16) der Solaranlage (1) so montiert sind, dass sie mindestens zwei der Paare (21, 22, 23) von Solarpaneelen bilden, wobei jedes der Paare (21, 22, 23) von Solarpaneelen mit mindestens einem anderen der Paare (21, 22, 23) von Solarpaneelen durch ein Scharnier montiert ist, das die unteren Ränder eines der Solarpaneele (11, 12, 13, 14, 15, 16) jedes der miteinander montierten Paare (21, 22, 23) von Solarpaneelen miteinander verbindet.

4. Solaranlage nach dem vorstehenden Anspruch,
**dadurch gekennzeichnet, dass** das Scharnier, das die unteren Ränder eines der Solarpaneele (11, 12, 13, 14, 15, 16) jedes der Paare (21, 22, 23) von Solarpaneelen miteinander verbindet, koaxial zu mindestens einem der Räder (51, 52, 53, 54) ist, das jedem der unteren Ränder der Solarpaneele (11, 12, 13, 14, 15, 16) zugeordnet ist, die durch das Scharnier miteinander verbunden sind.

5. Solaranlage nach einem der Ansprüche 3 bis 4,
**dadurch gekennzeichnet, dass** die Räder (51, 52, 53, 54), die den unteren Rändern der Solarpaneele (11, 12, 13, 14, 15, 16) zugeordnet sind, welche eines der Paare (21, 22, 23) von Solarpaneelen bilden, jeweils in zueinander parallelen Ebenen angeordnet sind, die einen Satz von Ebenen bilden, und dass die Räder (51, 52, 53, 54), die den unteren Rändern der Solarpaneele (11, 12, 13, 14, 15, 16) zugeordnet sind, welche die anderen Paare (21, 22, 23) von Solarpaneelen bilden, in Ebenen angeordnet sind, die zu demselben Satz von Ebenen gehören.

6. Solaranlage nach einem der Ansprüche 3 bis 4,
**dadurch gekennzeichnet, dass** jedes der Räder (51, 52, 53, 54), das einem der unteren Ränder der Solarpaneele (11, 12, 13, 14, 15, 16) zugeordnet ist, die zwei der Paare (21, 22, 23) von miteinander montierten Solarpaneelen bilden, in einer Ebene angeordnet ist, die von den Ebenen entfernt ist, in denen die anderen Räder (51, 52, 53, 54) angeordnet sind, die den unteren Rändern der Solarpaneele (11, 12, 13, 14, 15, 16) zugeordnet sind, die die zwei Paare (21, 22, 23) von miteinander montierten Solarpaneelen bilden.

7. Solaranlage nach einem der vorstehenden Ansprüche,
**dadurch gekennzeichnet, dass** die Räder (51, 52, 53, 54) den unteren Rändern der Solarpaneele (11, 12, 13, 14, 15, 16) über Gabeln (4) zugeordnet sind, die die Achsen der Räder (51, 52, 53, 54) halten, wobei jede der Gabeln (4) mit einem Verstärkungsstück fest verbunden ist, das selbst an dem unteren Rand eines der Solarpaneele (11, 12, 13, 14, 15, 16) befestigt ist, wobei sich das Verstärkungsstück entlang der Länge eines Abschnitts des unteren Randes über eine Länge erstreckt, die größer ist als das Zehnfache der Breite des Rades.

8. Solaranlage nach einem der vorstehenden Ansprüche,
**dadurch gekennzeichnet, dass** jedes der Paare (21, 22, 23) von zwei Solarpaneelen eine reversible Verriegelungseinrichtung des Scharniers (2) umfasst, die die oberen Ränder der zwei Solarpaneele (11, 12, 13, 14, 15, 16) des Paares (21, 22, 23) von Solarpaneelen miteinander verbindet, und zwar in einer Winkelposition, die einer entfalteten Konfiguration der genannten Solaranlage (1) entspricht.

## Claims

1. Solar power plant (1), comprising a plurality of solar panels (11, 12, 13, 14, 15, 16) movable relative to each other between a deployed configuration of said solar power plant (1), in which configuration said solar panels (11, 12, 13, 14, 15, 16) are spaced relatively apart from each other, and a folded configuration of said solar power plant (1), in which configuration said solar panels (11, 12, 13, 14, 15, 16) are brought relatively closer to each other, each of said solar panels (11, 12, 13, 14, 15, 16) having a lower edge and an upper edge opposite and substantially parallel to said lower edge, said upper edge being higher than said lower edge, at least in said folded configuration of said solar power plant (1),
at least some of said solar panels (11, 12, 13, 14, 15, 16) being joined in pairs (21, 22, 23) of two solar panels, joined to each other via at least one hinge (2) connecting the upper edges of each of said two solar panels (11, 12, 13, 14, 15, 16),
the lower edges of each of said two solar panels (11, 12, 13, 14, 15, 16) that form one of said pairs (21, 22, 23) of solar panels being associated with wheels (51, 52, 53, 54), of which the axles are substantially parallel to said lower edges,
**characterized in that** each of the wheels (51, 52, 53, 54) associated with one of the lower edges of said two solar panels (11, 12, 13, 14, 15, 16) that form one of said pairs (21, 22, 23) of solar panels is placed in a plane remote from the planes in which the other wheels (51, 52, 53, 54) associated with said lower edges of said two solar panels (11, 12, 13, 14, 15, 16) that form said pair (21, 22, 23) of solar panels are placed.

2. Solar power plant according to claim 1, **characterized in that** each of the wheels (51, 52, 53, 54) associated with one of the lower edges of said two solar panels (11, 12, 13, 14, 15, 16) that form one of said pairs (21, 22, 23) of solar panels is placed in a plane remote from the planes in which the other wheels (51, 52, 53, 54) associated with the lower edges of said two solar panels (11, 12, 13, 14, 15, 16) that form said pair (21, 22, 23) of solar panels are placed, said plane being remote from the other planes by a distance greater than the width of one of said wheels (51, 52, 53, 54).

3. Solar power plant according to either one of the preceding claims, **characterized in that** said solar panels (11, 12, 13, 14, 15, 16) of said solar power plant (1) are joined so as to form at least two of said pairs (21, 22, 23) of solar panels, each of said pairs (21, 22, 23) of solar panels being joined to at least one other of said pairs (21, 22, 23) of solar panels via a hinge connecting the lower edges of one of the solar panels (11, 12, 13, 14, 15, 16) of each of said pairs (21, 22, 23) of solar panels joined to each other.

4. Solar power plant according to the preceding claim, **characterized in that** said hinge connecting the lower edges of one of the solar panels (11, 12, 13, 14, 15, 16) of each of said pairs (21, 22, 23) of solar panels is coaxial with at least one of said wheels (51, 52, 53, 54), which is associated with each of said lower edges of said solar panels (11, 12, 13, 14, 15, 16) connected by said hinge.

5. Solar power plant according to either one of claims 3 and 4, **characterized in that** said wheels (51, 52, 53, 54) associated with the lower edges of the solar panels (11, 12, 13, 14, 15, 16) that form one of said pairs (21, 22, 23) of solar panels are placed respectively in planes that are parallel to each other and form a set of planes, and **in that** the wheels (51, 52, 53, 54) associated with the lower edges of the solar panels (11, 12, 13, 14, 15, 16) that form the other pairs (21, 22, 23) of solar panels are placed in planes belonging to the same set of planes.

6. Solar power plant according to either one of claims 3 and 4, **characterized in that** each of the wheels (51, 52, 53, 54) associated with one of the lower edges of the solar panels (11, 12, 13, 14, 15, 16) that form two of said pairs (21, 22, 23) of solar panels joined to each other is placed in a plane remote from the planes in which the other wheels (51, 52, 53, 54) associated with the lower edges of said solar panels (11, 12, 13, 14, 15, 16) that form said two pairs (21, 22, 23) of solar panels joined to each other are placed.

7. Solar power plant according to any one of the preceding claims, **characterized in that** said wheels (51, 52, 53, 54) are associated with said lower edges of said solar panels (11, 12, 13, 14, 15, 16) by means of clevises (4) holding the axles of said wheels (51, 52, 53, 54), each of said clevises (4) being rigidly connected to a reinforcement piece itself fastened to said lower edge of one of said solar panels (11, 12, 13, 14, 15, 16), said reinforcement piece extending along a portion of said lower edge over a length greater than ten times the width of said wheel.

8. Solar power plant according to any one of the preceding claims, **characterized in that** each of said pairs (21, 22, 23) of two solar panels comprises means for reversibly locking said hinge (2) connecting the upper edges of the two solar panels (11, 12, 13, 14, 15, 16) of the pair (21, 22, 23) of solar panels, said hinge then being locked in an angular position corresponding to a deployed configuration of said solar power plant (1).
